# EUROPÄISCHE PATENTSCHRIFT

(11) **EP 2 648 870 B1**
(45) Veröffentlichungstag und Bekanntmachung des Hinweises auf die Patenterteilung: **31.05.2017**
(21) Anmeldenummer: 11787689.6
(22) Anmeldetag: 23.11.2011
(51) Int. Cl.: B23C 5/00, B23C 5/22

(54) **SCHNEIDWERKZEUG ZUR SPANENDEN BEARBEITUNG EINES WERKZEUGS**
CUTTING TOOL FOR MACHINING A WORKPIECE
OUTIL DE COUPE POUR UNE PIECE A USINER

(30) Priorität: 07.12.2010 DE 102010054392
(43) Veröffentlichungstag der Anmeldung: 16.10.2013
(73) Patentinhaber: Hartmetall-Werkzeugfabrik Paul Horn GmbH, 72072 Tübingen (DE)
(72) Erfinder: LUIK, Matthias, 72766 Reutlingen (DE); OETTLE, Matthias, 72411 Bodelshausen (DE)
(74) Vertreter: Witte, Weller & Partner Patentanwälte mbB
(86) Internationale Anmeldenummer: PCT/EP2011/070811
(87) Internationale Veröffentlichungsnummer: WO 2012/076338

(56) Entgegenhaltungen:
- WO-A1-2006/136338
- DE-A1- 10 222 446
- US-A- 5 607 263

## Beschreibung

Die Erfindung betrifft ein Schneidwerkzeug zur spanenden Bearbeitung eines Werkstücks.

Ein Schneidwerkzeug und eine Schneidplatte für ein Schneidwerkzeug sind aus der DE 102 22 446 A1 bekannt. Solche Werkzeuge werden zum Beispiel zum Fräsen von Fasen verwendet. Insbesondere in der Metallverarbeitung ist das Entgraten bzw. Fasen einer Fläche von großer Bedeutung. Beim Fasen werden die scharfen Kanten von Werkstücken angeschrägt, wodurch die Verletzungsgefahr verringert wird. Verschiedene Schneidplatten können zur Erstellung von Fasen verwendet werden. Eine häufige Aufgabenstellung beim Erstellen von Fasen ist, dass sowohl an der Ober- als auch an der Unterseite eines Werkstückes eine Fase erzeugt werden soll. Da herkömmliche Schneidwerkzeuge im Allgemeinen nur eine Schneidplatte aufweisen, müssen die Fasen an Ober- und Unterseite des Werkstücks bisher in zwei Arbeitsgängen hergestellt werden. Der Aufwand zur Erstellung zweier gegenüberliegender Fasen ist somit deutlich größer als der Aufwand zur Erstellung nur einer Fase. Entsprechendes gilt für das Erstellen von Nuten und Fugen. Eine andere häufige Aufgabenstellung ist, dass an mehreren stapelbaren Werkstücken Fasen, Nuten oder Fugen angebracht werden sollen. Ein Bohrwerkzeug gemäß dem Oberbegriff des Anspruchs 1 ist aus WO 2006/136338 A1 bekannt. Aus der WO 2006/136338 A1 ist eine Schnittstelle eines Werkzeugsystems bekannt, an der mindestens zwei Teile des Werkzeugsystems miteinander verbindbar sind, wobei die Stirnseite des einen Teils an der Stirnseite des anderen Teils zumindest bereichsweise anliegt. Die Stirnseiten weisen radial verlaufende Vertiefungen und Erhöhungen auf, die komplementär ausgebildet sind, so dass die sich ergebende Kontur der einen Stirnseite im zusammengebauten Zustand der Schnittstelle in die der anderen eingreifen kann. Die Schnittsteile zeichnet sich dadurch aus, dass die Vertiefungen und Erhöhungen von innen nach außen - vorzugsweise kontinuierlich - breiter werden. Weitere Werkzeugschnittstellen sind aus der DE 102 22 446 A1 und der US 5,607,263 A bekannt.

Der Erfindung liegt die Aufgabe zugrunde, ein Schneidwerkzeug zu schaffen, mit dem zwei oder mehr Fasen, Nuten und/oder Fugen gleichzeitig hergestellt werden können. Außerdem liegt der Erfindung die Aufgabe zugrunde, ein Distanzelement und eine Schneidplatte für ein solches Schneidwerkzeug zu schaffen.

Diese Aufgabe wird gelöst durch ein Schneidwerkzeug gemäß Anspruch 1 mit
- einem Halter mit einer achsparallelen Halterbohrung und einer ersten Schnittstelle am werkstückseitigen Ende zur Ankopplung einer Schneidplatte mit einer mit der ersten Schnittstelle korrespondierenden Schnittstelle,
- einer ersten Schneidplatte mit einer mit der ersten Schnittstelle korrespondierenden zweiten Schnittstelle zur Ankopplung an einer mit der zweiten Schnittstelle korrespondierenden Schnittstelle und mit einer gegenüberliegend angeordneten dritten Schnittstelle,
- einem Distanzelement mit einer mit der dritten Schnittstelle korrespondierenden vierten Schnittstelle zur Ankopplung an einer mit der vierten Schnittstelle korrespondierenden Schnittstelle und mit einer gegenüberliegend angeordneten fünften Schnittstelle,
- einer zweiten Schneidplatte mit einer mit der fünften Schnittstelle korrespondierenden sechsten Schnittstelle zur Ankopplung an einer mit der sechsten Schnittstelle korrespondierenden Schnittstelle,
- mindestens einem Befestigungselement zur Befestigung der Schneidplatten, des Distanzelements und des Halters miteinander, wobei die erste Schneidplatte, die zweite Schneidplatte und das Distanzelement in deren Längsrichtung jeweils eine zu der Halterbohrung koaxiale Bohrung zur Aufnahme des mindestens ersten Befestigungselements aufweisen, wobei die vierte Schnittstelle mindestens eine Anlagefläche aufweist, wobei sich in einem axialen Bereich nur radiale Anlageflächen befinden.

Durch das Distanzelement mit seinen beiden gegenüberliegend angeordneten Schnittstellen ist es möglich, dass das Drehmoment vom Halter über erste Schneidplatte und Distanzelement an die zweite Schneidplatte weitergegeben werden kann und die zweite Schneidplatte mit exakt festgelegtem Abstand zur ersten Schneidplatte und koaxial zur ersten Schneidplatte geführt werden kann. Hiermit ist es also möglich, in einem Arbeitsgang zwei oder mehr Fasen (und/oder Fugen und/oder Nuten) in präzise festgelegten Abständen zu erzeugen. Es ist ferner ein Vorteil des erfindungsgemäßen Schneidwerkzeugs, dass durch Verwendung unterschiedlich langer Distanzelemente Fasen mit unterschiedlichen Abständen hergestellt werden können. Ein weiterer Vorteil ist, dass durch Kopplung mehrerer Schneidplatten und Distanzelemente auch mehr als zwei Fasen in einem Arbeitsgang hergestellt werden können. Ferner kann das Distanzelement angenommen und nur die zweite Schneidplatte direkt an dem Halter angebracht werden.

Erfingdungsgemäß weist die vierte Schnittstelle mindestens eine Anlagefläche auf, wobei sich in einem axialen Bereich nur radiale Anlageflächen befinden. Somit kann die Länge des Distanzelements verkürzt werden und die vierte Schnittstelle ist dennoch weiterhin zu der dritten Schnittstelle korrespondierend. Hierdurch ist es möglich, dass, auch wenn Distanzelemente in Serie nur mit bestimmten Längen hergestellt werden, die Distanzelemente individuell beispielsweise durch Abdrehen verkürzt werden können. Hierdurch sind beliebige Abstände zwischen den Schneidplatten realisierbar.

In einer bevorzugten Ausgestaltung der Erfindung sind die erste und die fünfte Schnittstelle im Wesentlichen gleich ausgebildet. Dadurch ist es möglich, dass herkömmliche Schneidplatten, die direkt auf den Halter aufgesetzt werden können, an das Distanzelement angekoppelt werden können und somit in einem erfindungsgemäßen Schneidwerkzeug auch als zweite Schneidplatte verwendet werden können. Ebenso können bereits bekannte Halter in einem erfindungsgemäßen Schneidwerkzeug verwendet werden. "Im Wesentlichen gleich" ist also so zu verstehen, dass die Schnittstellen nicht vollkommen identisch ausgebildet sein müssen, sondern die für die Kraftübertragung und die Kopplung der miteinander zu koppelnden Bauteile relevanten Elemente der Schnittstelle, wie etwa die Anzahl, Lage und Orientierung von Rippen und damit korrespondierenden Fugen.

Alternativ entspricht in einer weiteren Ausgestaltung die erste Schnittstelle nicht der fünften Schnittstelle. Hiermit ist es möglich, dass die erste und fünfte Schnittstelle an besondere Anforderungen der ersten und zweiten Schneidplatte angepasst werden können. Zum Beispiel könnte die zweite Schneidplatte ein dreischneidige Schneidplatte sein und die erste Schneidplatte eine fünfschneidige Schneidplatte. Diese Schneidplatten könnten unterschiedliche korrespondierende Schnittstellen erfordern, was in dieser Ausgestaltung ermöglicht wäre.

In einer bevorzugten Ausgestaltung sind die erste und fünfte Schnittstelle zueinander um die Halterlängsachse verdreht angebracht. In dieser Ausgestaltung sind die Schneidelemente der ersten und zweiten Schneidplatte radial zueinander versetzt angeordnet.

Eine in Umfangsrichtung versetzte (verdrehte) Positionierung der Schneidelemente der ersten und der zweiten Schneidplatte hat den Vorteil, dass eine bessere Kraftverteilung erreicht wird. Dies kann dadurch erreicht werden, dass die beiden Schneidplatten relativ zu den Schnittstellen einen unterschiedlichen Versatz aufweisen. Alternativ können, wie in dieser Ausgestaltung bevorzugt, die Schneidelemente relativ zu den Schnittstellen der Schneidplatten gleich positioniert sein, und der Versatz durch eine zueinander verdrehte radiale Ausrichtung der Schnittstellen erreicht werden.

In einer bevorzugten Ausgestaltung der Erfindung weist die Halterbohrung ein Innengewinde auf, das Befestigungselement ist eine Schraube mit einem korrespondierenden Außengewinde und alle Bohrungen sind durchgängig. Dadurch können die erste Schneidplatte, die zweite Schneidplatte und das Distanzelement mit einer Schraube besonders einfach und stabil befestigt werden. Ebenso ist ein einfacher Austausch des Distanzelements möglich.

In einer weiteren Ausgestaltung weist das Schneidwerkzeug genau ein Distanzelement auf. Dies hat den Vorteil, dass die zweite Schneidplatte relativ zu der ersten Schneidplatte mit besonders hoher Präzision befestigt werden kann, da sich Toleranzen von mehreren Distanzelementen nicht aufaddieren.

In einer weiteren Ausgestaltung weist das Schneidwerkzeug abwechselnd mehrere Distanzelemente und mehrere erste Schneidplatten auf. Hierdurch ist es möglich, dass mehr als zwei Schneidplatten mit festgelegten Abständen zueinander montiert werden können und somit auch mehr als zwei Fasen, Fugen und/oder Nuten gleichzeitig erzeugt werden können.

In einer weiteren Ausgestaltung korrespondiert die fünfte Schnittstelle des Distanzelements mit der vierten Schnittstelle, so dass mehrere Distanzelemente aneinandergekoppelt werden können. Ähnlich wie bei steckbaren Bausteinen können also durch einfaches Ankoppeln von Distanzelementen unterschiedliche Abstände realisiert werden. Durch Kombination von Distanzelementen unterschiedlicher Länge können somit durch einfaches Aneinanderstecken der Distanzelemente beliebige Abstände der Schneidplatten realisiert werden.

In einer bevorzugten Ausgestaltung weist die dritte Schnittstelle drei radiale Flächen auf, die zueinander Winkel von 60° bilden. Dies ermöglicht eine besonders stabile Befestigung.

In einer weiteren Ausgestaltung weist das Befestigungselement eine Innenbohrung zur Zuführung von Kühlmittel und/oder zur Durchführung eines Befestigungselementes auf. Vorteilhafterweise können radial angebrachte Öffnungen im Befestigungselement dazu verwendet werden, um Kühlmittel zu verschiedenen Schneidplatten zuzuführen.

Gegenstand der Erfindung ist auch eine Schneidplatte nach Anspruch 12 sowie ein Distanzelement nach Anspruch 13.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Explosionsdarstellung eines erfindungsgemäßen Schneidwerkzeugs mit Halter, erster Schneidplatte, Distanzelement, zweiter Schneidplatte und Befestigungselement,
- Fig. 2: eine Explosionsdarstellung ähnlich Fig. 1 aus einer anderen Perspektive,
- Fig. 3: eine Darstellung eines zusammengesetzten erfindungsgemäßen Schneidwerkzeugs,
- Fig. 4: eine Darstellung eines zusammengesetzten erfindungsgemäßen Schneidwerkzeugs aus einer anderen Perspektive,
- Fig. 5: eine Darstellung eines zusammengesetzten erfindungsgemäßen Schneidwerkzeugs von der dem Werkstück zugewandten Seite aus gesehen,
- Fig. 6: eine Ansicht der dem Werkstück zugewandten Seite eines erfindungsgemäßen Distanzelements, und
- Fig. 7: eine Ansicht der dem Werkstück abgewandte Seite eines erfindungsgemäßen Distanzelements.

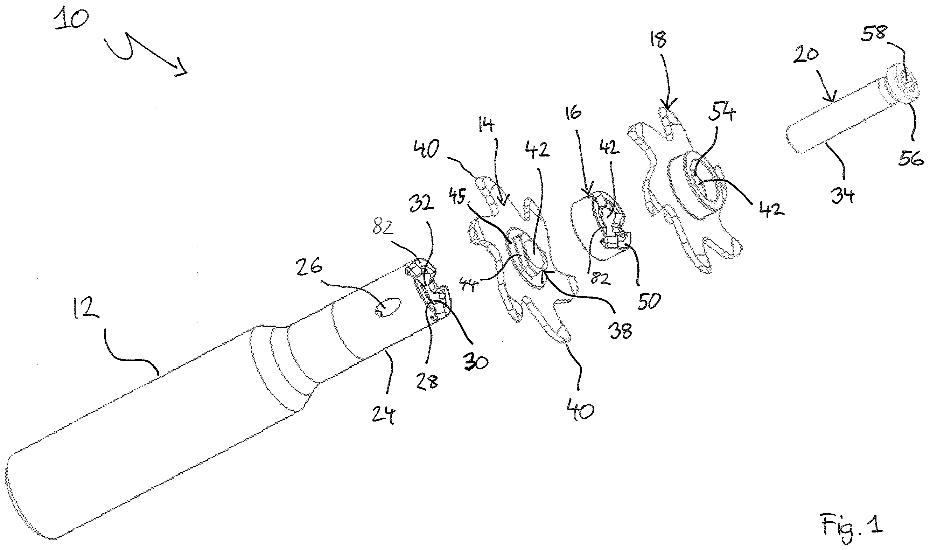

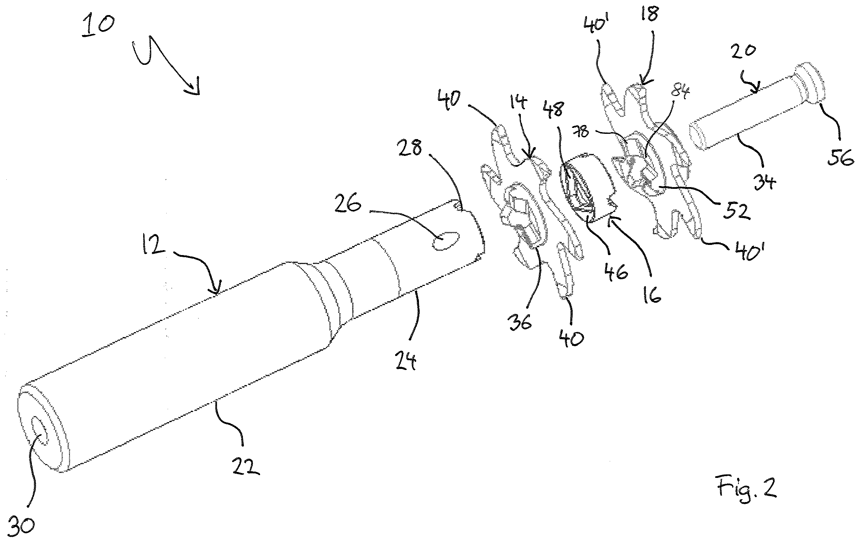

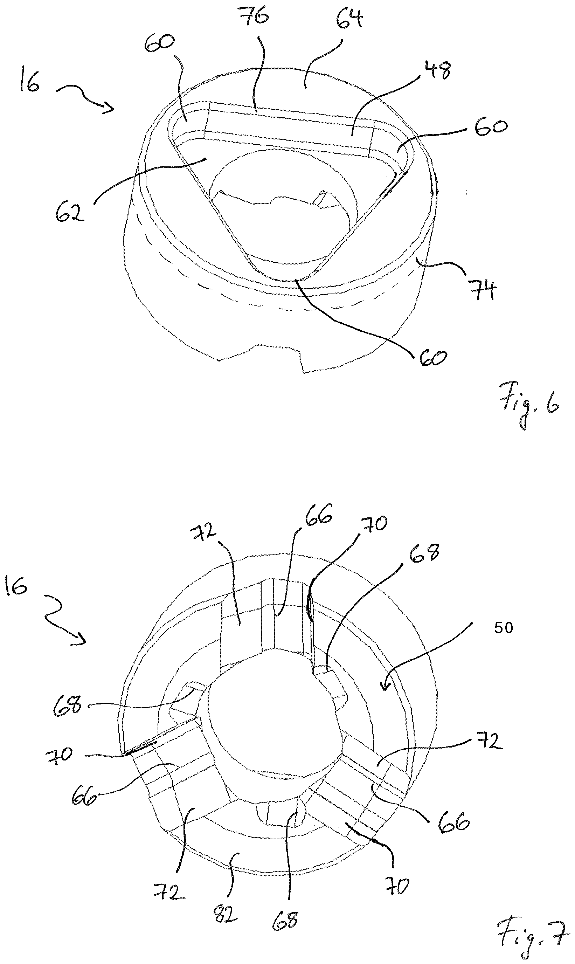

Fig. 1 und 2 zeigen das Schneidwerkzeug 10, das einen Halter 12, eine erste Schneidplatte 14, eine Distanzelement 16, eine zweite Schneidplatte 18 und ein Befestigungselement 20 aufweist. Der Halter 12 umfasst hier ein Halterbasisteil 22 und ein Auflötteil 24, kann aber grundsätzlich auch einstückig ausgebildet sein. Das Auflötteil 24 weist mehrere Löcher 26 zur Zuführung von Kühlmittel auf. Am werkstückseitigen Ende des Auflötteils ist stirnseitig eine erste Schnittstelle 28 angebracht. Die achsparallele Halterbohrung 30 verläuft axial durch den Halter. Am werkstückseitigen Ende der achsparallelen Halterbohrung ist ein Innengewinde 32 angebracht, so dass das Befestigungselement 20, das hier eine Schraube ist und ein Außengewinde 34 aufweist, mit dem Halter 12 verschraubt werden kann. Die erste Schnittstelle 28 ist in diesem Beispiel gleich ausgebildet wie die fünfte Schnittstelle 50, die in Fig. 7 detailliert gezeigt wird.

Die erste Schneidplatte 14 weist auf der dem Halter zugewandten Seite eine zur ersten Schnittstelle korrespondierende zweite Schnittstelle 36 auf. Auf der dem Halter abgewandten Seite befindet sich eine dritte Schnittstelle 38. In radialer Richtung sind über den Umfang verteilt Schneidelemente 40 angebracht. In dieser Ausgestaltung ist Schneidplatte mit sechs Schneidelementen gezeigt, die Anzahl kann aber je nach gewünschter Bearbeitung unterschiedlich gewählt werden. Durch die Schneidplatte 14 verläuft eine mit der Halterbohrung 30 koaxiale Bohrung 42. Die dritte Schnittstelle 38 weist drei radial nach außen gerichtete radiale Anlageflächen 44 und eine axiale Anlagefläche 45 auf. Die radialen Anlagenflächen 44 stehen zueinander in einem Winkel von 60°.

An dem Distanzelement 16 befindet sich auf der dem Halter zugewandten Seite eine vierte Schnittstelle 46. Die vierte Schnittstelle 46 weist drei nach innen gerichtete radiale in Richtung der Halterlängsachse verlaufende Anlageflächen 48 auf. Die nach innen gerichteten radialen Anlageflächen 48 stehen ebenfalls in einem Winkel von 60° zueinander. An der dem Halter abgewandten Seite des Distanzelements befindet sich eine fünfte Schnittstelle 50. Da die zweite Schnittstelle 36 mit der fünften Schnittstelle 50 korrespondiert, können eine weitere Schneidplatte vom Typ der ersten Schneidplatte und ein weiteres Distanzelement zwischen dem Distanzelement 16 und der zweiten Schneidplatte 18 eingefügt werden. Durch Hinzufügen von weiteren ersten Schneidplatten und Distanzelementen kann somit ein Schneidwerkzeug 10 zum gleichzeitigen Durchführen von mehreren Schneidbearbeitungen (z.B. Erstellen von mehr als zwei Fasen, Fugen und/oder Nuten) gebildet werden.

Abweichend von dem in den Figuren gezeigten Schneidwerkzeug können die vierte und fünfte Schnittstelle 46, 50 des Distanzelements auch zueinander korrespondierend ausgestaltet werden. Somit können mehrere solche Distanzelemente aneinander gekoppelt werden und größere Abstände zwischen erster und zweiter Schneidplatte 14, 18 realisiert werden.

Auf der dem Halter zugewandten Seite der zweiten Schneidplatte 18 befindet sich die sechste Schnittstelle 52. In Umfangrichtung verteilt befinden sich an der zweiten Schneidplatte 18 Schneidelemente 40'. Diese sind relativ zu den Schneidelementen 40 der ersten Schneidplatte versetzt angeordnet. Dies ist dadurch erreicht, dass die fünfte Schnittstelle 50 (die der ersten Schnittstelle 28 entspricht) im Vergleich zur ersten Schnittstelle 28 entsprechend in Umfangsrichtung verdreht ist. An der dem Halter abgewandten Seite befindet sich eine Anlagefläche 54, an die der Kopf 56 des Befestigungselements 20 angelegt werden kann.

An der Schraube (dem Befestigungselement) 20 befindet sich ein Außengewinde 34. Die Schraube 20 ist so lang, dass es durch die mit der Halterbohrung 30 koaxialen Bohrungen von erster Schneidplatte 14, Distanzelement 16 und zweiter Schneidplatte 18 geführt und mit dem Innengewinde 32 der Halterbohrung 30 verschraubt werden kann. Am werkstückseitigen Ende der Schraube 20 ist hierfür ein Werkzeugeingriff 58, z.B. für einen Torx-Schlüssel, vorgesehen.

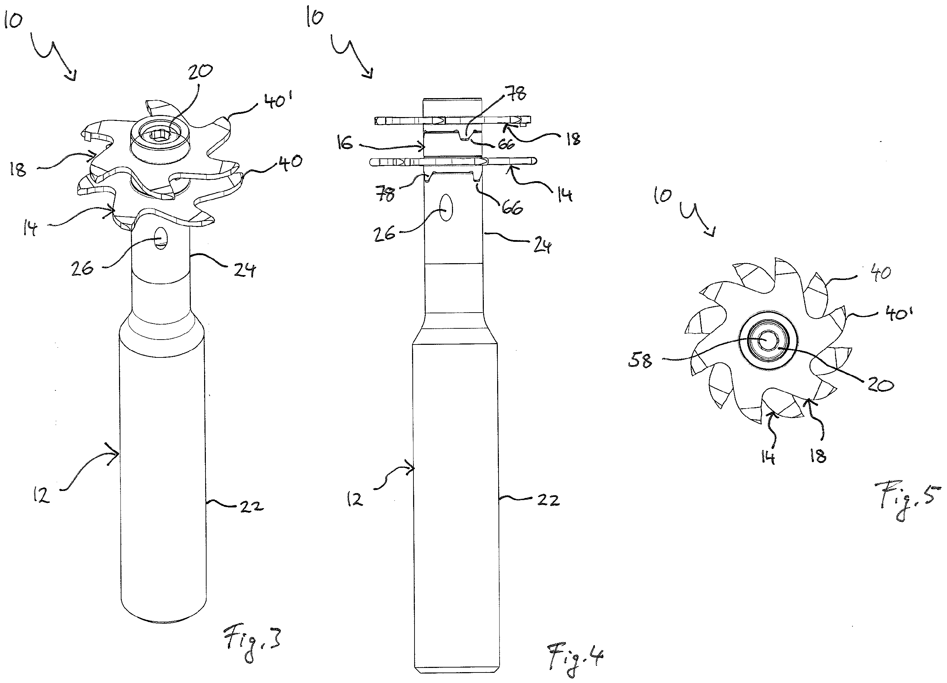

Fig. 3 und Fig. 4 zeigen zwei seitliche Ansichten eines erfindungsgemäßen Schneidwerkzeugs 10 in zusammengesetztem Zustand. Zusätzlich zu den in Fig. 1 und 2 bereits erläuterten Bestandteilen sind hier die Nuten 66 der ersten Schnittstelle 28 und der zweiten Schnittstelle 36 sowie die komplementär ausgebildeten Rippen 78 der zweiten und sechsten Schnittstelle 36, 52 dargestellt. Erste und fünfte Schnittstelle 28, 50 sind gleich ausgestaltet, ebenso die dazu korrespondierende zweite und sechste Schnittstelle 28, 52. Die erste Schnittstelle 28 ist dabei aber relativ zur fünften Schnittstelle 50 um die Halterlängsachse leicht verdreht angeordnet. Hierdurch ergibt sich, dass auch zweite und sechste Schnittstelle 36, 52 und somit erste und zweite Schneidplatte 14, 18 zueinander um die Halterlängsachse verdreht angeordnet sind.

Fig. 5 zeigt eine Draufsicht auf das Schneidwerkzeug 10 aus der dem Werkstück zugewandten Seite. Erkennbar ist, dass die Schneidelemente 40, 40' der ersten und zweiten Schneidplatte 14, 18 zueinander einen Versatz aufweisen. Die zueinander versetzte Anordnung der Schneidelemente 40, 40' ist eine bevorzugte Ausgestaltung, da sich eine gleichmäßigere Kraftverteilung bei der Bearbeitung ergibt. Es ist aber ebenso denkbar, dass in einer anderen Ausgestaltung die erste und die fünfte Schnittstelle 28, 50 nicht zueinander verdreht sind, und dass somit auch die Schneidelemente der ersten und zweiten Schneidplatte 14, 18 keinen Versatz aufweisen.

Fig. 6 zeigt die dem Halter zugewandte Seite eines erfindungsgemäßen Distanzelements 16. Die in der Abbildung oben gezeigte vierte Schnittstelle 46 weist drei nach innen gerichtete radiale Anlageflächen 48 auf (nur eine davon ist in der Abbildung sichtbar). Die drei radialen Anlageflächen 48 sind miteinander über drei abgerundete Eckstücke 60 verbunden. Außerdem weist die vierte Schnittstelle 46 eine innere axiale Fläche 62 und eine äußere axiale Fläche 64 auf. Die Abstützung einer an die vierte Schnittstelle 46 angekoppelten weiteren Schnittstelle erfolgt dabei über die äußere axiale Fläche 64.

Der Übergang zwischen den nach innen gerichteten radialen Anlageflächen 48 und der äußeren axialen Fläche 64 ist ausgebildet in Form einer abgeschrägten Fläche (Fase) 76, die sich auch entlang des runden Eckstücks 60 erstreckt. Die Fase 76 erleichtert das Ankoppeln mit einer korrespondierenden Schnittstelle, ist aber ansonsten nicht wesentlich für die Schnittstelleneigenschaften der fünften Schnittstelle.

Das Distanzelement 16 kann an der dem Halter zugewandten Seite in dem axialen Bereich 74 in der Länge verkürzt (z.B. abgerieben, abgedreht oder abgesägt) werden, ohne dass sich dadurch die Schnittstelleneigenschaften der vierten Schnittstelle 46 wesentlich verändern würden. Die axiale Ausdehnung des axialen Bereichs 74 hängt dabei von der axialen Ausdehnung des Bereichs ab, in dem die Schnittstelle nur radiale Flächen aufweist.

Die zur vierten Schnittstelle 46 korrespondierende dritte Schnittstelle 38 weist drei axial vorstehende, nach außen gerichtete radiale Anlageflächen 80 auf (gezeigt in Fig. 1). Die Höhe dieser Anlageflächen 80 in axialer Richtung ist dabei geringer als die Höhe der nach innen gerichteten radialen Anlageflächen 48 der vierten Schnittstelle 46. Im montierten Zustand umschließen die nach innen gerichteten Anlageflächen 48 somit vollständig die nach außen gerichteten Anlageflächen 80.

Fig. 7 zeigt die dem Werkstück abgewandte Seite des erfindungsgemäßen Distanzelements 16. Die in der Abbildung sichtbare fünfte Schnittstelle 50 weist drei Nuten 66, drei Nebennuten 68 sowie drei axiale Flächen 82 auf. Jede Nut 66 weist geneigte Seitenflächen 70, 72 auf, wobei die Seitenflächen 72 steiler geneigt sind und als Drehmomentmitnahmeflächen vorgesehen sind. Eine zu der fünften Schnittstelle 50 korrespondierende Schnittstelle weist drei korrespondierende Rippen 78 auf (dargestellt in Fig. 2).

Die axialen Flächen 82 sind nicht notwendigerweise zur Anlage mit einer korrespondierenden Fläche der sechsten Schnittstelle 52 gedacht. Die Tragbereiche werden stattdessen lediglich durch Teilflächen an den Seitenwänden der Nuten 66 der fünften Schnittstelle 50 gebildet. Zwischen axialer Fläche 82 und einer gegenüber liegenden axialen Fläche 84 an der sechsten Schnittstelle 52 bleibt damit ein kleiner Spalt. Dies vereinfacht die Herstellung, weil, im Unterschied zu einer vollflächigen Anlage an der axialen Fläche 82, lediglich die kleineren Tragbereiche an den Nuten 66 eng toleriert hergestellt werden müssen. Mit anderen Worten, die Genauigkeit der mit der fünften und sechsten Schnittstelle 50, 52 realisierten Ankopplung wird durch außerhalb der begrenzten Tragbereiche ggf. auftretende Oberflächenfehler nicht gestört, falls solche an den außerhalb der Tragbereiche liegenden, axialen Flächen 82 vorhanden sein sollten. Entsprechende Überlegungen gelten für die gegenüberliegende axiale Fläche 84 an der sechsten Schnittstelle 52. Diese Erwägungen sind in der Produktion von besonderer Bedeutung, weil die die Hartmetall-Schneidplatten bildenden, gesinterten Rohlinge aufwändig zu bearbeiten sind. Die hier dargelegten Überlegungen zu fünfter und sechster Schnittstelle 50, 52 gelten entsprechend z.B. für erste und zweite Schnittstelle 28, 36.

Die Erfindung stellt ein einfach herzustellendes und leicht zu bedienendes Werkzeug dar, mit dem Doppel- oder Mehrfachbearbeitungen mit hoher Genauigkeit in einem Arbeitsgang angefertigt werden können. Mit nur zwei neuen Bauteilen (einer ersten Schneidplatte mit zwei Schnittstellen und einem Distanzelement) entsteht ein neuartiges Werkzeug, das eine bedeutende Arbeitserleichterung beim der Vornahme von mehreren, insbesondere gleichartigen Bearbeitungsvorgängen bietet. Mit dem vorgeschlagenen Werkzeug kann dabei ein einziges Werkstücks bearbeitet werden. Es ist aber auch geeignet, mehrere Werkstücke gleichzeitig zu bearbeiten, indem diese im Paket gestapelt bearbeitet werden. Bei dem erfindungsgemäßen Werkzeug kann es sich ferner sowohl um ein rotierendes als auch ein stehendes spanabhebendes Werkzeug handeln.

## Patentansprüche

1. Schneidwerkzeug (10) zur spanenden Bearbeitung eines Werkstücks mit:
- einem Halter (12) mit einer achsparallelen Halterbohrung (30) und einer ersten Schnittstelle (28) zur Ankoppelung einer Schneidplatte (14) mit einer mit der ersten Schnittstelle (28) korrespondierenden Schnittstelle (36),
- einer ersten Schneidplatte (14) mit einer mit der ersten Schnittstelle (28) korrespondierenden zweiten Schnittstelle (36) zur Ankopplung an einer mit der zweiten Schnittstelle (36) korrespondierenden Schnittstelle (28) und mit einer gegenüberliegend angeordneten dritten Schnittstelle (38),
- einem Distanzelement (16) mit einer mit der dritten Schnittstelle (38) korrespondierenden vierten Schnittstelle (46) zur Ankopplung an einer mit der vierten Schnittstelle (46) korrespondierenden Schnittstelle (38) und mit einer gegenüberliegend angeordneten fünften Schnittstelle (50),
- einer zweiten Schneidplatte (18) mit einer mit der fünften Schnittstelle (50) korrespondierenden sechsten Schnittstelle (52) zur Ankopplung an einer mit der sechsten Schnittstelle (52) korrespondierenden Schnittstelle (50), und
- mindestens einem Befestigungselement (20) zur Befestigung der Schneidplatten (14,18), des Distanzelements (16) und des Halters (12) miteinander, wobei die erste Schneidplatte (14), die zweite Schneidplatte (18) und das Distanzelement (16) in deren Längsrichtung jeweils eine zu der Halterbohrung (30) koaxiale Bohrung (42) zur Aufnahme des mindestens ersten Befestigungselements (20) aufweisen,
**dadurch gekennzeichnet, dass** die vierte Schnittstelle (46) mindestens eine Anlagefläche aufweist, wobei sich in einem axialen Bereich nur radiale Anlageflächen (48) befinden.

2. Schneidwerkzeug (10) nach Anspruch 1, wobei die erste Schnittstelle (28) und die fünfte Schnittstelle (50) im Wesentlichen gleich ausgestaltet sind.

3. Schneidwerkzeug (10) nach einem der vorherigen Ansprüche, wobei die erste (28) und fünfte Schnittstelle (50) zueinander um die Halterlängsachse verdreht angebracht sind.

4. Schneidwerkzeug (10) nach einem der vorherigen Ansprüche, wobei die Halterbohrung (30) ein Innengewinde (32) aufweist und das Befestigungselement (20) eine Schraube mit einem korrespondierenden Außengewinde (34) ist und alle Bohrungen (42) durchgängig sind.

5. Schneidwerkzeug (10) nach einem der vorherigen Ansprüche mit mehreren sich abwechselnden Distanzelementen (16) und ersten Schneidplatten (14).

6. Schneidwerkzeug (10) nach einem der vorherigen Ansprüche, wobei die fünfte Schnittstelle (50) des Distanzelements (16) mit der vierten Schnittstelle (46) korrespondiert, so dass mehrere Distanzelemente (16) aneinander gekoppelt werden können.

7. Schneidwerkzeug (10) nach einem der vorherigen Ansprüche, wobei die dritte Schnittstelle (38) drei radiale Anlageflächen (44) aufweist, die zueinander unter einem Winkel von 60° verlaufen.

8. Schneidwerkzeug (10) nach einem der vorherigen Ansprüche, wobei das Befestigungselement (20) eine Innenbohrung zur Zuführung von Kühlmittel und/oder zur Durchführung eines Befestigungselements aufweist.

9. Schneidwerkzeug (10) nach einem der vorherigen Ansprüche, wobei die erste Schnittstelle (28) drei radial ausgerichtete Nuten (66) aufweist und die zweite Schnittstelle (36) drei dazu korrespondierende Rippen (78) aufweist.

10. Schneidwerkzeug (10) nach Anspruch 9, wobei jede Nut (66) eine erste und eine zweite geneigte Seitenfläche (70,72) aufweist, wobei die zweite Seitenfläche (72) steiler geneigt ist als die erste geneigte Seitenfläche (70).

## Claims

1. A cutting tool (10) for machining a workpiece, comprising:
- a holder (12) having an axially parallel holder bore (30) and a first interface (28) for the coupling of a cutting insert (14) having an interface (36) corresponding to the first interface (28),
- a first cutting insert (14) having a second interface (36), corresponding to the first interface (28), for the coupling to an interface (28) corresponding to the second interface (36) and having an oppositely disposed third interface (38),
- a spacer element (16) having a fourth interface (46), corresponding to the third interface (38), for the coupling to an interface (38) corresponding to the fourth interface (46), and having an oppositely disposed fifth interface (50),
- a second cutting insert (18) having a sixth interface (52), corresponding to the fifth interface (50), for the coupling to an interface (50) corresponding to the sixth interface (52), and
- at least one fastening element (20) for fastening together the cutting inserts (14, 18), the spacer element (16) and the holder (12), wherein the first cutting insert (14), the second cutting insert (18) and the spacer element (16) respectively have in their longitudinal direction a bore (42), coaxial to the holder bore (30), for the reception of the at least first fastening element (20)
**characterized in that** the fourth interface (46) has at least one contact surface, wherein only radial contact surfaces (44) are present in an axial region.

2. The cutting tool (10) as claimed in claim 1, wherein the first interface (28) and the fifth interface (50) are configured to be substantially the same.

3. The cutting tool (10) as claimed in one of the previous claims, wherein the first (28) and fifth interface (50) are placed twisted relative to each other about the holder longitudinal axis.

4. The cutting tool (10) as claimed in one of the previous claims, wherein the holder bore (30) has an internal thread (32), and the fastening element (20) is a screw having a corresponding external thread (34), and all bores (42) are through bores.

5. The cutting tool (10) as claimed in one of the previous claims, having a plurality of alternating spacer elements (16) and first cutting inserts (14).

6. The cutting tool (10) as claimed in one of the previous claims, wherein the fifth interface (50) of the spacer element (16) corresponds to the fourth interface (46), so that a plurality of spacer elements (16) can be coupled to one another.

7. The cutting tool (10) as claimed in one of the previous claims, wherein the third interface (38) has three radial contact surfaces (44), which run at an angle of 60° to one another.

8. The cutting tool (10) as claimed in one of the previous claims, wherein the fastening element (20) has an inner bore for the supply of coolant and/or for the lead-through of a fastening element.

9. The cutting tool (10) as claimed in one of the previous claims, wherein the first interface (28) has three radially aligned grooves (66) and the second interface (36) has three ribs (78) corresponding thereto.

10. The cutting tool (10) as claimed in claim 9, wherein each groove (66) has a first and a second inclined side face (70, 72), the second side face (72) being more steeply inclined than the first inclined side face (70).

## Revendications

1. Outil de coupe (10) pour l'usinage par enlèvement de copeaux d'une pièce, comprenant :
- un support (12) avec un alésage de fixation d'axe parallèle (30) et une première interface (28) pour le couplage d'une plaquette de coupe (14) à une interface (36) correspondant à la première interface (28),
- une première plaquette de coupe (14) avec une deuxième interface (36) correspondant à la première interface (28), pour le couplage à une interface (28) correspondant à la deuxième interface (36) et à une troisième interface (38) disposée en regard,
- un élément d'espacement (16) comprenant une quatrième interface (46) correspondant à la troisième interface (38) pour le couplage à une interface (38) correspondant à la quatrième interface (46) et à une cinquième interface (50) disposée en regard,
- une deuxième plaquette de coupe (18) avec une sixième interface (52) correspondant à la cinquième interface (50) pour le couplage à une interface (50) correspondant à la sixième interface (52), et
- au moins un élément de fixation (20) pour la fixation des plaquettes de coupe (14, 18), de l'élément d'espacement (16) et du support (12) les uns aux autres, la première plaquette de coupe (14), la deuxième plaquette de coupe (18) et l'élément d'espacement (16) présentant dans leur direction longitudinale à chaque fois un alésage (42) coaxial à l'alésage de fixation (30) pour recevoir l'au moins un premier élément de fixation (20),
**caractérisé en ce que** la quatrième interface (46) présente au moins une surface d'appui, seulement des surfaces d'appui radiales (48) se trouvant dans une région axiale.

2. Outil de coupe (10) selon la revendication 1, dans lequel la première interface (28) et la cinquième interface (50) sont configurées de manière essentiellement identique.

3. Outil de coupe (10) selon l'une quelconque des revendications précédentes, dans lequel la première (28) et la cinquième interface (50) sont montées de manière tournée l'une par rapport à l'autre autour de l'axe longitudinal du support.

4. Outil de coupe (10) selon l'une quelconque des revendications précédentes, dans lequel l'alésage de retenue (30) présente un filetage interne (32) et l'élément de fixation (20) est une vis avec un filetage extérieur correspondant (34) et tous les alésages (42) sont traversants.

5. Outil de coupe (10) selon l'une quelconque des revendications précédentes, comprenant une alternance de plusieurs éléments d'espacement (16) et de premières plaquettes de coupe (14).

6. Outil de coupe (10) selon l'une quelconque des revendications précédentes, dans lequel la cinquième interface (50) de l'élément d'espacement (16) correspond à la quatrième interface (46) telle sorte que plusieurs éléments d'espacement (16) puissent être accouplés les uns aux autres.

7. Outil de coupe (10) selon l'une quelconque des revendications précédentes, dans lequel la troisième interface (38) présente trois surfaces d'appui radiales (44) qui s'étendent suivant un angle de 60° les unes par rapport aux autres.

8. Outil de coupe (10) selon l'une quelconque des revendications précédentes, dans lequel l'élément de fixation (20) présente un alésage interne pour l'alimentation en fluide de refroidissement et/ou pour le passage d'un élément de fixation.

9. Outil de coupe (10) selon l'une quelconque des revendications précédentes, dans lequel la première interface (28) présente trois rainures orientées radialement (66) et la deuxième interface (36) présente trois nervures correspondantes (78).

10. Outil de coupe (10) selon la revendication 9, dans lequel chaque rainure (66) présente une première et une deuxième surface latérale inclinée (70, 72), la deuxième surface latérale (72) étant plus fortement inclinée que la première surface latérale inclinée (70).
